(19) Europäisches Patentamt
European Patent Office
Office européen des brevets

(11) **EP 1 477 777 B3**

(12) **NEUE EUROPÄISCHE PATENTSCHRIFT**
Nach dem Beschränkungsverfahren (B3-1)

(45) Hinweis auf die Patenterteilung:
**31.10.2012   Patentblatt 2012/44**

(45) Veröffentlichungstag und Bekanntmachung des Hinweises auf die Entscheidung über den Antrag auf Beschränkung:
**B3-1  26.02.2020   Patentblatt 2020/09**

(21) Anmeldenummer: **04009057.3**

(22) Anmeldetag: **16.04.2004**

(51) Int Cl.:
*G01D 5/36* (2006.01)    *G01D 5/38* (2006.01)
*G01D 5/347* (2006.01)

(54) **Optoelektronische Detektoranordnung zur Unterdrückung unerwünschter Oberwellen**

Optoelectronic detector assembly for suppression of unwanted harmonics

Agencement de détecteurs optoelectroniques pour suppression des harmoniques indésirables

(84) Benannte Vertragsstaaten:
**AT BE BG CH CY CZ DE DK EE ES FI FR GB GR HU IE IT LI LU MC NL PL PT RO SE SI SK TR**

(30) Priorität: **02.05.2003   DE 10319609**

(43) Veröffentlichungstag der Anmeldung:
**17.11.2004   Patentblatt 2004/47**

(73) Patentinhaber: **Dr. Johannes Heidenhain GmbH 83292 Traunreut (DE)**

(72) Erfinder: **Holzapfel, Wolfgang 83119 Obing (DE)**

(56) Entgegenhaltungen:
**EP-B- 0 250 711     EP-B- 0 541 829**
**EP-B- 0 849 566     DE-A- 19 830 294**

EP 1 477 777 B3

**EP 1 477 777 B3**

**Beschreibung**

Die vorliegende Erfindung betrifft eine optoelektronische Detektoranordnung gemäß dem Oberbegriff des Anspruches 1, die insbesondere in der Abtasteinheit einer optischen Positionsmesseinrichtung zur Abtastung eines periodischen Streifenmusters und der Erzeugung verschiebungsabhängiger Abtastsignale einsetzbar ist.

Eine derartige Detektoranordnung ist beispielsweise aus der EP 250 711 A2 bekannt. Die in dieser Druckschrift offenbarte Detektoranordnung dient dazu, in der Abtasteinheit einer optischen Positionsmesseinrichtung ein periodisches Streifenmuster abzutasten, das dort in einer Detektionsebene resultiert. Erzeugt wird das Streifenmuster in bekannter Art und Weise aufgrund der Wechselwirkung des von einer Lichtquelle in der Abtasteinheit emittierten Lichtbündels mit einer Messteilung und ggf. ein oder mehreren weiteren Teilungen im Abtaststrahlengang. Im Fall der Relativbewegung von Abtasteinheit und Messteilung wird das Streifenmuster senkrecht zu den Streifen verschoben und damit an jeder Stelle periodisch intensitätsmoduliert. Aus der optoelektronischen Abtastung des Streifenmusters lassen sich in bekannter Art und Weise verschiebungsabhängige, sinusförmige Abtastsignale in Form von periodischen Inkrementalsignalen generieren. Erzeugt werden auf diese Art und Weise in der Regel zwei oder mehr definiert phasenverschobene Inkrementalsignale, die dann in einer Folgeelektronik weiterverarbeitet werden.

Die derart erzeugten Abtastsignale sind aufgrund verschiedenster Störeinflüsse in der Regel nicht ideal sinusförmig, sondern weisen aufgrund von Oberwellenanteilen eine hiervon abweichende Signalform auf. Zur fehlerfreien Weiterverarbeitung der Abtastsignale in einer Folgeelektronik sind jedoch weitestgehend oberwellenfreie Signale wünschenswert. Aus diesem Grund wird in der genannten EP 250 711 A2 vorgeschlagen, durch eine geeignete Anordnung und Dimensionierung der einzelnen Detektorelemente in der vorgesehenen Detektoranordnung eine definierte Oberwellenfilterung vorzunehmen. Hierzu werden in dieser Druckschrift in den verschiedenen Ausführungsbeispielen unterschiedlichste geometrische Formen der einzelnen Detektorelemente vorgeschlagen. Nachteilig an den verschiedenen Lösungen ist jedoch zum einen, dass keine vollständige Nutzung der verfügbaren Detektorelement-Grundfläche erfolgt, also bestimmte Bereiche der Detektorelement-Grundfläche ungenutzt bleiben. Für eine hohe Signalintensität ist eine möglichst gute Nutzung der verfügbaren Detektorelement-Grundfläche jedoch wünschenswert. Zum anderen sind die vorgeschlagenen Geometrien der Detektorelemente empfindlich gegenüber eventuellen Störungen im abgetasteten Streifenmuster, die wiederum zu Signalfehlern führen können. Derartige Störungen im Streifenmuster können etwa durch Verkippungen und/oder Verdrehungen der Abtasteinheit gegenüber der Messteilung oder aber durch eine unebene Oberfläche der Messteilung verursacht werden. Es resultieren in diesen Fällen deformierte und/oder gedehnte Streifenmuster, die abgetastet werden.

Aus der EP 849 566 B1 ist ferner bekannt, dass durch eine oberwellenfilternde Auslegung von Abtastelementen in einer Positionsmesseinrichtung in Verbindung mit einem geeignet gewählten Abtastabstand die Erzeugung unverzerrter Abtastsignale möglich ist.

Die EP 541 829 B1 offenbart weitere Varianten von Abtastelementen für magnetische oder optische Positionsmesseinrichtungen, die jeweils die Erzeugung oberwellenfreier Abtastsignale erlauben. Die verschiedenen, vorgeschlagenen Abtastelemente erweisen sich jedoch insbesondere hinsichtlich einer einfachen Fertigung als noch nicht optimal.

Aufgabe der vorliegenden Erfindung ist es daher, eine optoelektronische Detektoranordnung für eine Abtasteinheit einer optischen Positionsmesseinrichtung anzugeben, die sowohl eine zuverlässige Oberwellenfilterung in den resultierenden Abtastsignalen sicherstellt als auch eine möglichst effiziente Ausnutzung der verfügbaren Detektorfläche gewährleistet.

Diese Aufgabe wird gelöst durch eine optoelektronische Detektoranordnung mit den Merkmalen im kennzeichnenden Teil des Anspruches 1 bzw. durch eine Detektoranordnung mit den Merkmalen im kennzeichnenden Teil des Anspruches 2.

Vorteilhafte Ausführungsformen der erfindungsgemäßen optoelektronischen Detektoranordnung ergeben sich aus den Maßnahmen, die in den von Anspruch 1 oder Anspruch 2 abhängigen Ansprüchen aufgeführt sind.

Gegenstand der vorliegenden Erfindung ist ferner eine Positionsmesseinrichtung, in deren Abtasteinheit eine derartige Detektoranordnung vorgesehen ist.

Erfindungsgemäß ist nunmehr vorgesehen, die oberwellenfilternde geometrische Form bzw. Kontur der einzelnen Detektorelemente so auszugestalten, dass eine unmittelbar aufeinanderfolgende Anordnung der einzelnen Detektorelemente in der Streifenverschieberichtung des abzutastenden periodischen Streifenmusters möglich ist. Die geometrische Form ist hierbei nichtrechteckförmig gewählt. Es resultiert eine dichtest mögliche Anordnung der einzelnen Detektorelemente innerhalb der erfindungsgemäßen Anordnung, d.h. eine optimale Ausnutzung der verfügbaren Detektorelement-Grundfläche. Dies wiederum hat eine hohe Signalintensität der erzeugten Abtastsignale zur Folge.

Durch die erfindungsgemäße Anordnung der einzelnen Detektorelemente, die allein durch Verschiebungstransformationen in Streifenverschieberichtung um Vielfache von P/N (wobei P:= Streifenmusterperiode; N := Zahl der Detektorelemente pro Streifenmusterperiode) ineinander überführbar sind, wird sichergestellt, dass die einzelnen Detektorelemente jeweils den gleichen Flächenschwerpunkt in Bezug auf die Richtung senkrecht zur Streifenverschieberichtung besitzen. Dies hat zur Folge, dass eventuelle Störungen im abgetasteten Streifenmuster alle Detektorelemente gleichmäßig beeinflussen und dadurch Fehler bei der Weiterverarbeitung minimiert werden. Derartige Fehler resultieren etwa wie oben erwähnt aus der Verkippung und/oder Verdrehung der Abtasteinheit gegenüber der Messteilung. Insbesondere eine Verkippung der Abtasteinheit um eine Achse senkrecht zur Messteilungs-Oberfläche (sog. Moiré-Verkippung) verschiebt die Phasenlagen der phasenverschobenen Abtastsignale zueinander, was wiederum erhebliche Interpolationsfehler bei der Weiterverarbeitung zur Folge hat.

Es werden drei oder vier Detektorelemente innerhalb einer abgetasteten Streifenmusterperiode P angeordnet, die nach den erfindungsgemäßen Prinzipien ausgestaltet sind, um auf diese Art und Weise entweder drei um je 120° bzw. vier um je 90° phasenverschobene Inkrementalsignale zu erzeugen.

Über die gesamte Detektoranordnung erstrecken sich eine Vielzahl von derartigen Detektorelementen, wobei jeweils diejenigen Detektorelemente leitend miteinander verbunden sind, die aus der Streifenmusterabtastung phasengleiche Abtastsignale erzeugen. Vorzugsweise besitzen miteinander verbundene Detektorelemente einen Abstand, der einer Streifenmusterperiode entspricht. Die erfindungsgemäße Anordnung gewährleistet somit auch dann eine sichere Abtastung des Streifenmusters, wenn z.B. eine partielle Verschmutzung auf der Messteilung vorliegt.

In einer vorteilhaften Ausführungsform werden durch die entsprechende geometrische Form der Detektorelemente definiert die ungeradzahligen Oberwellenanteile aus den Abtastsignalen entfernt; die geradzahligen Oberwellenanteile lassen sich in bekannter Art und Weise anderweitig entfernen, etwa durch die sog. Gegentaktverschaltung von um 180° phasenversetzten Abtastsignalen.

Alternativ zur unmittelbaren Formgebung der einzelnen Detektorelemente kann im Rahmen der vorliegenden Erfindung auch vorgesehen werden, zumindest auf Teilen der einzelnen Detektorelemente opake Abdeckmasken anzuordnen, die entsprechende Konturen zur Oberwellenfilterung besitzen.

Auf Grundlage der vorliegenden Erfindung lassen sich somit besonders einfache Positionsmesseinrichtungen aufbauen, die i.w. nur eine Lichtquelle, eine Messteilung und eine Detektoranordnung umfassen. Das heißt, es ist insbesondere keine weitere Abtastteilung mehr erforderlich wie in klassischen Systemen.

Selbstverständlich lassen sich die erfindungsgemäßen Maßnahmen sowohl in Verbindung mit linearen als auch mit rotatorischen Positionsmesseinrichtungen einsetzen.

Weitere Vorteile sowie Einzelheiten der vorliegenden Erfindung ergeben sich aus der nachfolgenden Beschreibung von Ausführungsbeispielen anhand der beiliegenden Figuren.

Dabei zeigt

Figur 1     eine schematisierte Ansicht einer rotatorischen Positionsmesseinrichtung, in der eine erfindungsgemäße optoelektronische Detektoranordnung eingesetzt wird;

Figur 2     eine Draufsicht auf ein erstes Ausführungsbeispiel einer erfindungsgemäßen optoelektronischen Detektoranordnung in Verbindung mit dem damit abgetasteten periodischen Streifenmuster;

Figur 3     eine schematisierte Teilansicht eines ersten Ausführungsbeispiels für ein einzelnes Detektorelement, das in einer erfindungsgemäßen Detektoranordnung einer linearen Positionsmesseinrichtung einsetzbar ist und anhand dessen die zugrundeliegenden Überlegungen bzgl. der Geometrie der einzelnen Detektorelemente erläutert werden;

Figur 4     eine schematisierte Teilansicht eines ersten Ausführungsbeispiels für ein einzelnes Detektorelement, das in einer erfindungsgemäßen Detektoranordnung einer linearen Positionsmesseinrichtung einsetzbar ist;

Figur 5     eine schematisierte Teilansicht eines dritten Ausführungsbeispiels für ein einzelnes Detektorelement, geeignet für den Einsatz in einer erfindungsgemäßen Detektoranordnung einer rotatorischen Positionsmesseinrichtung.

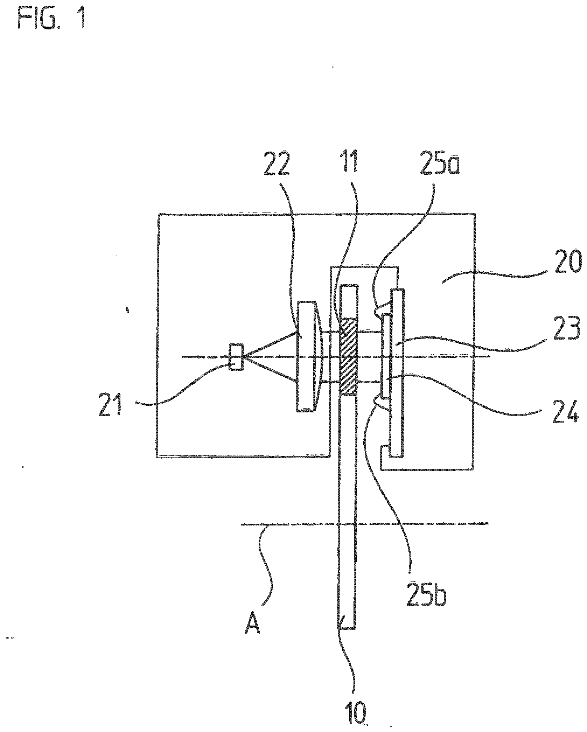

In Figur 1 ist in einer schematisierten Seitenansicht eine Positionsmesseinrichtung dargestellt, in der eine erfindungsgemäß ausgebildete optoelektronische Detektoranordnung 24 eingesetzt wird. Im Fall des dargestellten Ausführungsbeispieles handelt es sich um eine rotatorische Positionsmesseinrichtung mittels der die Position bzw. der jeweilige Drehwinkel einer um die Achse A rotierenden Teilscheibe 10 bestimmt werden soll. Die Teilscheibe 10 besitzt in diesem Beispiel eine kreisringförmig angeordnete Messteilung 11, die im Durchlicht abgetastet wird und in bekannter Art und Weise als periodische Abfolge von lichtdurchlässigen und lichtundurchlässigen Teilbereichen ausgebildet ist. Die Periodizität der Messteilung 11, d.h. die Breite eines benachbarten Paares von lichtdurchlässigen und lichtundurchlässigen Teilbereichen sei als Messteilungsperiode TPM bezeichnet.

Zur Erzeugung positionsabhängiger Abtastsignale umfasst die dargestellte Positionsmesseinrichtung ferner eine Abtasteinheit 20 mit einer Lichtquelle 21, einer der Lichtquelle vorgeordnete Kollimatoroptik 22 sowie einer Abtastplatine 23, auf der in der Detektionsebene die erfindungsgemäße optoelektronische Detektoranordnung 24 angeordnet ist. Mittels Bonddrähten 25a, 25b ist die Detektoranordnung 24 mit elektrisch leitfähigen Leiterbahnen auf der Abtastplatine 23 verbunden. Über die nachfolgend noch im Detail zu beschreibende optoelektronische Detektoranordnung 24 wird im Fall der Relativbewegung von Teilscheibe 10 und Abtasteinheit 20 ein in der Detektionsebene resultierendes periodisches Streifenmuster abgetastet, das verschiebungsabhängig moduliert wird, d.h. in periodische, elektrische Abtastsignale respektive Inkrementalsignale umgewandelt.

Darüber hinaus kann die Abtastplatine 23 zusätzliche - nicht dargestellte - elektronische Bauelemente zur Weiterverarbeitung der generierten Abtastsignale umfassen.

Die von der Positionsmesseinrichtung erzeugten und ggf. schon aufbereiteten Abtastsignale werden über ebenfalls nicht dargestellte Signalübertragungsleitungen einer Folgeelektronik zugeführt, die beispielsweise bestimmte Steuer- und/oder Regelungsaufgaben übernimmt.

Im Ausführungsbeispiel der Figur 1 ist eine rotatorische Positionsmesseinrichtung dargestellt, bei der sich die Messrichtung x, also die relative Verschieberichtung von Messteilung 10 und Abtasteinheit 20, entlang einer Kreisbahn erstreckt und die Erzeugung der positionsabhängigen Abtastsignale über eine Durchlichtabtastung erfolgt. Selbstverständlich lassen sich die erfindungsgemäßen Maßnahmen aber auch in Verbindung mit linearen Positionsmesseinrichtungen verwirklichen, bei der sich die Messrichtung x in linearer Richtung bzw. entlang einer Geraden erstreckt; das gleiche gilt für alternative Abtastprinzipien wie etwa Auflichtabtastungen und/oder alternative optische Abtaststrahlengänge mit ggf. weiteren Abtastgittern etc..

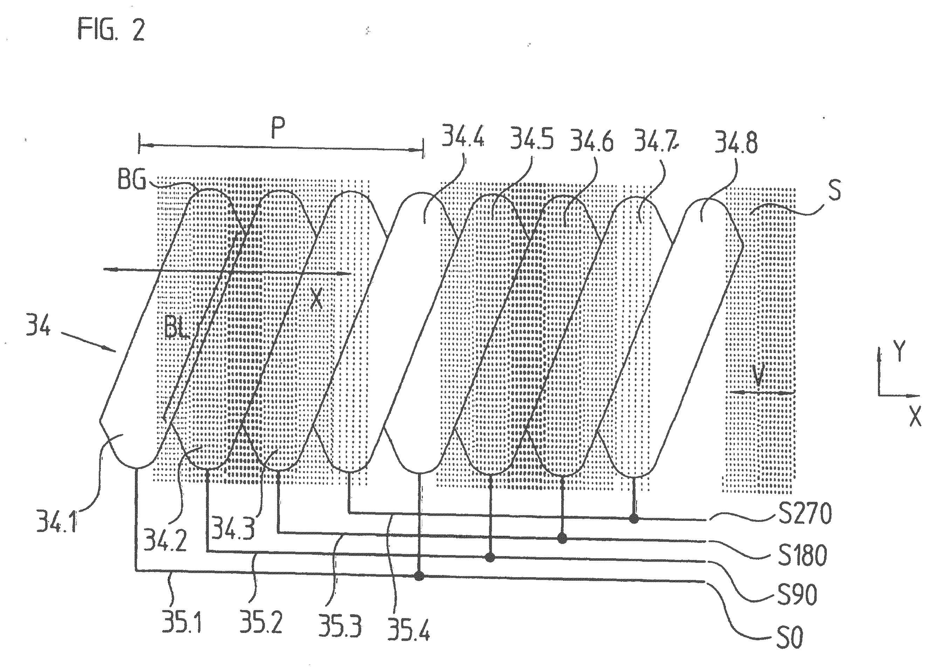

Eine Teil-Draufsicht auf ein mögliches Ausführungsbeispiel einer erfindungsgemäßen optoelektronischen Detektoranordnung 34 ist schematisiert in Figur 2 in Verbindung mit dem in der Detektionsebene resultierenden periodischen Streifenmuster gezeigt. Der besseren Darstellbarkeit wegen ist hierbei der Linearfall gezeigt, bei dem ein sich in Streifenverschieberichtung v bzw. Messrichtung x erstreckendes periodisches Streifenmuster S mit der Streifenmusterperiode P mittels einer sich ebenfalls linear in Richtung x erstreckenden Detektoranordnung 34 abgetastet wird. Im Fall der Relativbewegung von Messteilung und Abtasteinheit wandert das dargestellte Streifenmuster S in einer nachfolgend als Streifenverschieberichtung v bezeichneten Richtung über die Detektoranordnung 34 und bewirkt derart die Erzeugung mehrerer phasenverschobener Abtastsignale S0, S90, S180, S270. Im vorliegenden Beispiel ist die oben bereits erwähnte Streifenverschieberichtung v identisch mit der Messrichtung x. Grundsätzlich ist es jedoch nicht zwingend, dass beide -richtungen zusammenfallen; beispielsweise resultiert im Fall einer sog. Moiré-Abtastung ein Streifenmuster in der Detektionsebene, das schräg bzgl. der Detektoranordnung orientiert ist, d.h. die Richtungen x und v nehmen dann einen Winkel ungleich 0° zueinander ein.

Die Detektoranordnung 34 umfasst im vorliegenden Ausführungsbeispiel eine Vielzahl von einzelnen strahlungsempfindlichen Detektorelementen 34.1 - 34.8, von denen in Fig. 2 lediglich ein Teil dargestellt ist. In der Praxis kann die Detektoranordnung 34 bis zu 1000 einzelne Detektorelemente 34.1 - 34.8 aufweisen.

Wie ebenfalls aus Figur 2 erkennbar, sind jeweils diejenigen einzelnen Detektorelemente 34.1 - 34.8 über entsprechende Kontaktierungsleitungen 35.1 - 35.4 elektrisch leitend miteinander verbunden, die bei der Abtastung des Streifenmusters S phasengleiche Abtastsignale S0, S90, S180, S270 liefern. Der Abstand von miteinander verbundenen Detektorelementen 34.1 - 34.8 beträgt im vorliegenden Beispiel eine Streifenmusterperiode P. Im Beispiel ist hierbei die Verbindung jedes vierten Detektorelementes miteinander über die entsprechenden Kontaktierungsleitungen 35.1 - 35.4 vorgesehen, also die Verbindung des Detektorelementes 34.1 über die Kontaktierungsleitung 35.1 mit dem Detektorelement 34.5 usw.. Das über die miteinander verbundenen Detektorelemente 34.1, 34.5 etc. resultierende Abtastsignal sei nachfolgend als Abtastsignal S0 bezeichnet; analog hierzu resultieren die weiteren drei Abtastsignale S90, S180 und S270. Die aufeinanderfolgenden periodischen Abtastsignale besitzen hierbei jeweils einen Phasenversatz von 90° zueinander.

Innerhalb einer abgetasteten Streifenmusterperiode P sind demzufolge im vorliegenden Fall N = 4 Detektorelemente 34.1 - 34.8 unmittelbar aufeinanderfolgend in Streifenverschieberichtung v angeordnet, so dass ausgangsseitig die erwähnten N = 4 um jeweils 90° phasenverschobenen, periodischen Abtastsignale S0, S90, S180 und S270 resultieren, die in bekannter Art und Weise weiterverarbeitbar sind.

Wie aus Figur 2 ersichtlich weicht die Geometrie bzw. Kontur der einzelnen Detektorelemente 34.1 - 34.8 von einer Rechteckform ab und ist erfindungsgemäß dergestalt gewählt, dass durch die entsprechende geometrische Formgebung eine definierte Filterung von unerwünschten Oberwellen aus den Abtastsignalen resultiert. Im Fall der dargestellten Detektorelement-Geometrie der Figur 2 kann etwa eine Filterung von ungeraden Oberwellen bewerkstelligt werden. Zu den konkreten Formgebungsprinzipien bei der geforderten Eliminierung von bestimmten Oberwellen sei auf die Beschreibung der nachfolgenden Beispiele verwiesen.

Zu erwähnen ist bzgl. der grundsätzlichen erfindungsgemäßen Überlegungen ferner, dass die verschiedenen Detektorelemente 34.1 - 34.8 allesamt die gleiche geometrische Form aufweisen. Dies bedeutet, dass die Detektorelemente 34.1 - 34.8 jeweils durch einfache mathematische Verschiebungstransformationen in der Anordnungsrichtung bzw. Streifenverschieberichtung v ineinander überführbar sind; hierbei ist jeweils eine entsprechende Verschiebungstransformation in Streifenverschieberichtung v um den Verschiebungsbetrag d = P/N erforderlich, um derart ein Detektorelement 34.1 - 34.8 in ein anderes Detektorelement 34.1 - 34.8 zu überführen.

Aus Figur 2 ist ferner erkennbar, dass sich jeweils benachbarte Detektorelemente 34.1 - 34.8 entlang einer gemeinsamen, annähernd linearen Berührungslinie BL berühren. Im Fall der beiden Detektorelemente 34.1 und 34.2 ist die entsprechende Berührungslinie mit dem Bezugszeichen BL eingezeichnet. Wie ebenfalls ersichtlich nimmt die Berührungslinie BL mit der Streifenverschieberichtung v vorzugsweise einen Winkel $\alpha$ ein, der ungleich 90° ist.

Abgesehen von der annähernd linearen Berührungslinie BL besitzen die einzelnen Detektorelemente 34.1 - 34.8 im vorliegenden Ausführungsbeispiel an den jeweiligen Längsenden im wesentlichen bogenförmige Begrenzungslinien BG; in Bezug auf die Dimensionierungsdetails bzgl. der Formgebung einzelner Detektorelemente 34.1 - 34.8 sei ebenfalls auf die nachfolgende Beschreibung verwiesen.

Die einzelnen Detektorelemente 34.1 - 34.8 der erfindungsgemäßen Detektoranordnung 34 besitzen aufgrund der oben erläuterten Transformationseigenschaften entlang einer Schnittlinie parallel zur Streifenverschieberichtung v jeweils die gleiche Breite b. Im Fall der dargestellten linearen Detektoranordnung ist die Breite b über die y-Ausdehnung der Berührungslinie BL für alle Detektorelemente 34.1 - 34.8 gleich und weist den Wert b = P/N auf.

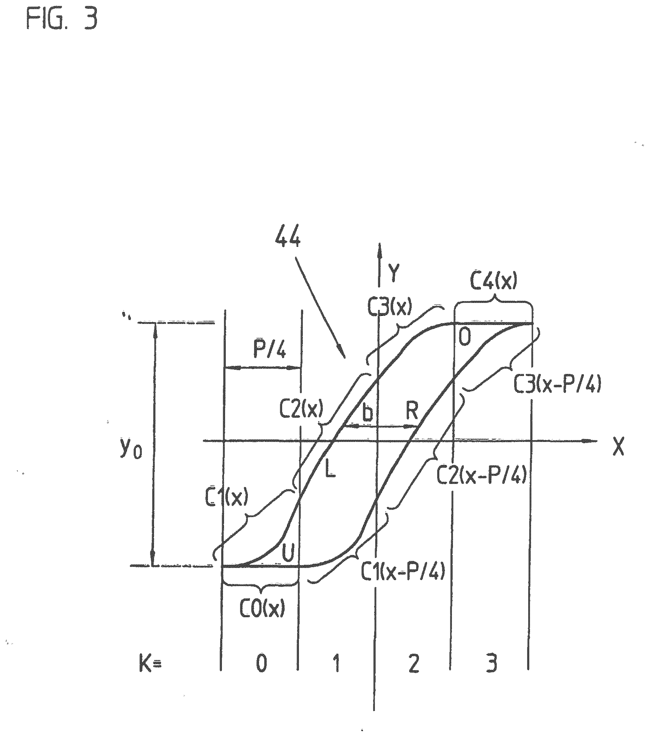

Anhand der Figuren 3 - 5 sei nunmehr nachfolgend erläutert, wie in Abhängigkeit von bestimmten gewünschten Filtereigenschaften die Formgebung eines einzelnen Detektorelements innerhalb der erfindungsgemäßen Detektoranordnung vorgenommen wird. Grundsätzlich wird in diesen Beispielen davon ausgegangen, dass jeweils vier um 90° phasenversetzte Abtastsignale erzeugt werden.

Dargestellt ist in Figur 3 ein Beispiel eines einzelnen Detektorelementes 44 das grundsätzlich zur Filterung aller Oberwellen des resultierenden Abtastsignals geeignet wäre; die vollständige Detektoranordnung weist wiederum eine Vielzahl derartiger Detektorelemente auf, die in Messrichtung x unmittelbar aufeinander folgend angeordnet sind. Zu erwähnen ist ferner, dass im Fall des vorliegenden Beispiels wiederum die Messrichtung x und die Streifenverschieberichtung v zusammenfallen. Das dargestellte Detektorelement kommt hierbei in einer Detektoranordnung einer linearen Positionsmesseinrichtung zum Einsatz.

Das einzelne Detektorelement 44 erstreckt sich in Messrichtung x über insgesamt vier gleich breite Quadranten K0 - K3, wobei die Breite eines Quadranten K0 - K3 jeweils gleich P/4 gewählt wird und P wiederum die abgetastete Streifenmusterperiode angibt. Das in Figur 3 dargestellte Detektorelement 44 wird von einem linken Kurvenzug L, einem rechten Kurvenzug R sowie einem oberen Kurvenzug O und einem unteren Kurvenzug U begrenzt. Die einzelnen Kurvenzüge L, R, O und U wiederum lassen sich wie gezeigt durch Kurvenelemente $y = C_n(x)$, n = 0, 1,...4 beschreiben, die jeweils in einem Quadranten K0 - K3 mit der Breite P/4 definiert sind. Die Kurvenelemente $C_1(x)$, $C_2(x)$, $C_3(x)$ des linken Kurvenzuges L in den Quadranten K0, K1, K2 stimmen mit denjenigen Kurvenelementen $C_1(x-P/4)$, $C_2(x-P/4)$ und $C_3(x-P/4)$ in den jeweils rechts benachbarten Quadranten K1, K2, und K3 überein. Diese Dimensionierungsregel stellt im vorliegenden Beispiel eine konstante Breite b des Detektorelementes 44 über die gesamte y-Erstreckung sicher. Gleichzeitig ist dadurch gewährleistet, dass die einzelnen Detektorelemente der Detektoranordnung nahtlos in einem Abstand P/4 aneinandergereiht werden können, um die gewünschte Phasenverschiebung von 90° zwischen den generierten Abtastsignalen benachbarter Detektorelemente zu liefern.

Um die gewünschte Filterwirkung zu erzielen, muss nunmehr an jeder Position x die Höhe des Detektorelementes 44 in y-Richtung einer gewünschten Filterfunktion F(x) entsprechen. Für eine vollständige Filterung aller Oberwellen gemäß dem vorliegenden Ausführungsbeispiel lautet die entsprechende Filterfunktion

$$F(x) = F_0 * (1 + \cos(2\pi x/P)) \qquad (\text{Gl. 1}),$$

wobei $F_0$ eine frei wählbare Konstante darstellt, die die gewünschte maximale y-Erstreckung der Detektorelemente angibt. Die Einhaltung dieser Bedingung und damit die Filterung aller Oberwellen lässt sich gewährleisten, wenn die einzelnen Kurvenelemente $C_n(x)$ den folgenden Bedingungen genügen:

$$C_1(x) = C_0(x) + F(x) \qquad (\text{Bedingung im Quadrant K0}) \qquad (\text{Gl. 2.1})$$

$$C_2(x) = C_1(x-P/4) + F(x) \qquad (\text{Bedingung im Quadrant K1}) \qquad (\text{Gl. 2.2})$$

$$C_3(x) = C_2(x-P/4) + F(x) \qquad (\text{Bedingung im Quadrant K2}) \qquad (\text{Gl. 2.3})$$

$$C_4(x) = C_3(x-P/4) + F(x) \qquad (\text{Bedingung im Quadrant K3}) \qquad (\text{Gl. 2.4})$$

Im dargestellten Beispiel ergibt sich unter der Annahme eines geraden Kurvenzuges U bei einer Detektorlänge yo für die einzelnen Kurvenelemente:

$$C_0(x) = -y_0/2 \quad \text{(für } -P/2 < x < -P/4) \qquad \text{(Gl. 3.1)}$$

$$C_1(x) = y_0/2 * [-\tfrac{1}{2} + \tfrac{1}{2} * \cos(2\pi x/P)] \qquad \text{(Gl. 3.2)}$$

$$C_2(x) = y_0/2 * [\tfrac{1}{2} * \sin(2\pi x/P) + \tfrac{1}{2} * \cos(2\pi x/P)] \qquad \text{(Gl. 3.3)}$$

$$C_3(x) = y_0/2 * [\tfrac{1}{2} * \sin(2\pi x/P)] \qquad \text{(Gl. 3.4)}$$

$$C_4(x) = y_0/2 \qquad \text{(Gl. 3.5)}$$

Im vorliegenden Beispiel wurde die Konstante $F_0 = y_0/2$ gewählt, so dass das resultierende Detektorelement 35 bzgl. y = 0 zentriert ist. Da demzufolge alle Detektorelemente ihren geometrischen Schwerpunkt bei y = 0 haben und jeweils die identisch geometrische Form besitzen, werden die daraus resultierenden Abtastsignale allesamt gleichermaßen von eventuellen Störungen beeinflusst, die unterschiedlich in y-Richtung wirken. Beispiele derartiger Störungen wären etwa sog. Moire-Drehungen der Abtasteinheit, Verschmutzungen der Messteilung, inhomogene Bestrahlungsstärken der Beleuchtung usw..

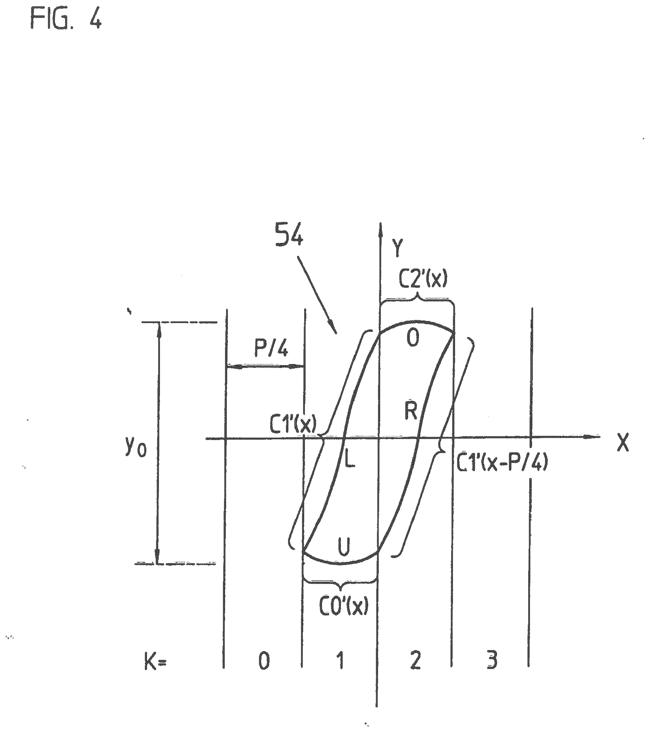

Alternativ zur vorab erläuterten Filterung aller Oberwellen kann selbstverständlich im Rahmen der vorliegenden Erfindung auch vorgesehen werden, lediglich bestimmte Oberwellen zu filtern. Dies sei nachfolgend anhand des in Figur 4 dargestellten Ausführungsbeispiels eines entsprechenden Detektorelementes erläutert. Gezeigt ist in Figur 4 hierbei wiederum nur ein einzelnes Detektorelement 54, wie es in einer erfindungsgemäßen Detektoranordnung für eine wiederum lineare Positionsmesseinrichtung zum Einsatz kommt.

In diesem Beispiel ist nunmehr lediglich die Filterung aller ungeradzahligen Oberwellen vorgesehen, d.h. sämtliche geradzahligen Oberwellen werden durch anderweitige Maßnahmen in bekannter Art und Weise eliminiert. Hierzu gehört etwa das Ausnutzen bestimmter optischer Gegebenheiten oder aber die sog. Gegentaktverschaltung von Abtastsignalen etc..

Die erforderliche Filterfunktion F(x) lautet für die Filterung der ungeradzahligen Oberwellen

$$F(x) = \begin{cases} F_0 * \cos(2\pi x/P) & \text{für } -P/4 < x < P/4 \\ 0 & \text{sonst,} \end{cases} \qquad \text{(Gl. 4)}$$

wobei $F_0$ wiederum eine frei wählbare Konstante darstellt, die die gewünschte y-Erstreckung der Detektorelemente angibt.

Aus der Filterbedingung in Gl. 4 ergibt sich, dass sich das entsprechende Detektorelement 54 - wie in Figur 4 dargestellt - lediglich in den beiden mittleren Quadranten K1 und K2 erstreckt.

Die zur geometrischen Beschreibung der Detektorelement-Kontur erforderlichen Kurvenelemente lassen sich dann durch folgende Funktionen angeben:

$$C_1{}'(x) = C_0{}'(x) + F_0 * \cos(2\pi x/P) \qquad \text{(Gl. 5.1)}$$

$$C_2{}'(x) = C_0{}'(x - P/4) + F_0 * \sin(2\pi x/P) + F_0 * \cos(2\pi x/P) \qquad \text{(Gl. 5.2)}$$

Grundsätzlich lässt sich hierbei $C_0{}'(x)$ beliebig wählen. Im Fall der Wahl einer Funktion $C_0{}'(x)$, die im Quadranten K1 etwa spiegelsymmetrisch zur Mittellinie des Quadranten (parallel zur y-Achse) ist, ergibt sich:

$$C_0{}'(x) = (-y_0/\sqrt{2}) * \cos(2\pi x/P + \pi/4) \qquad\qquad (Gl.\ 6.1)$$

$$C_1{}'(x) = (y_0/\sqrt{2}) * \sin(2\pi x/P + \pi/4) \qquad\qquad (Gl.\ 6.2)$$

$$C_2{}'(x) = (y_0/\sqrt{2}) * \cos(2\pi x/P - \pi/4) \qquad\qquad (Gl.\ 6.3)$$

Ein Detektorelement 54 mit derartigen begrenzenden Kurvenelementen ist in Figur 4 dargestellt. Neben der oberwellenfilternden Wirkung besitzt auch diese Ausführungsform eines Detektorelementes wiederum die bereits oben diskutierten Eigenschaften bzgl. Transformationseigenschaften etc..

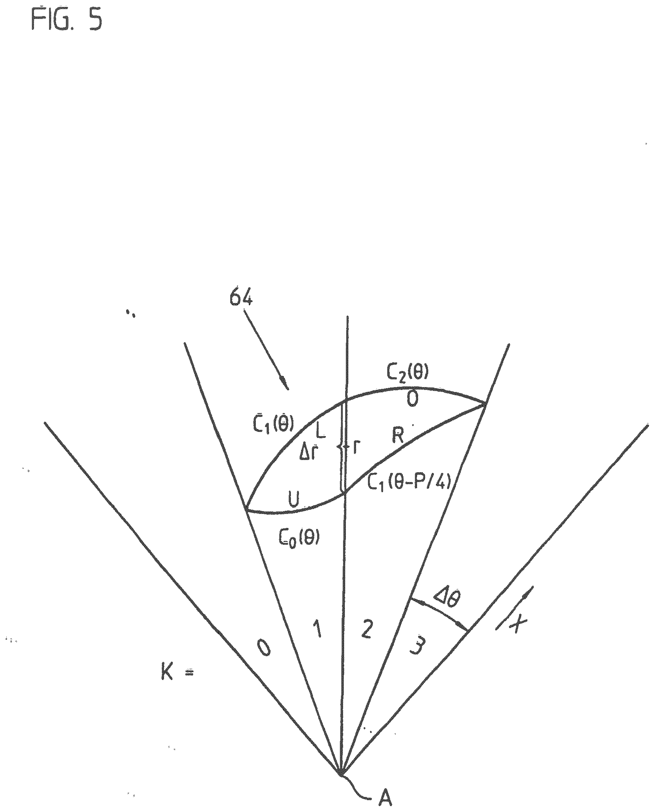

Eine dritte Ausführungsform eines Detektorelementes, wie es in einer erfindungemäßen optoelektronischen Detektoranordnung zum Einsatz kommen kann, sei abschließend anhand von Figur 5 erläutert. Im Unterschied zu den vorher diskutierten Beispielen, ist ein derartiges Detektorelement 64 bzw. eine Detektoranordnung mit entsprechenden Detektorelementen 64 zum Einsatz in einer rotatorischen Positionsmesseinrichtung geeignet, wie sie etwa in Figur 1 gezeigt ist.

Wie aus Figur 5 ersichtlich, sind die vier Quadranten K0 - K3 nunmehr als Kreissegmente in Bezug auf die Rotationsachse A ausgebildet, die sich jeweils über das gleiche Winkelsegment $\Delta\theta$ erstrecken. Analog zum Linearfall erstreckt sich ein derartiges Kreissegment nunmehr über das Winkelsegment $\Delta\theta$ = P/4, wenn P das Winkelsegment angibt, über das sich eine Periode P des in diesem Fall sich kreisringförmig erstreckenden Streifenmusters erstreckt.

Analog zum linearen Fall müssen hier die Detektorelemente nunmehr durch eine winkelmäßige Verschiebetransformation ineinander überführbar sein. Im Gegensatz zum linearen Fall wird jedoch die senkrecht zur Verschieberichtung gemessene Höhe der Detektorelemente (also deren radiale Erstreckung) nicht durch die Filterfunktion $F(\theta)$ direkt bestimmt, da eine Verzerrung durch die radiale Geometrie berücksichtigt werden muss.

Wie im vorherigen Ausführungsbeispiel ist lediglich die Filterung aller ungeradzahligen Oberwellen vorgesehen, während die geradzahligen Oberwellen in bekannter Art und Weise anderweitig beseitigt werden.

Die erforderliche Filterfunktion $F(\theta)$ lautet für die Filterung der ungeradzahligen Oberwellen im rotatorischen Fall dann:

$$F(\theta) = \begin{cases} F_0 * \cos(2\pi\theta/P) & \text{für } -P/4 < \theta < P/4 \\ 0 & \text{sonst,} \end{cases} \qquad (Gl.\ 7)$$

wobei $F_0$ wiederum eine frei wählbare Konstante darstellt, die die gewünschte Erstreckung der Detektorelemente in nunmehr radialer Richtung r angibt.

Aus der Filterbedingung in Gl. 7 ergibt sich wiederum, dass sich das entsprechende Detektorelement 64 wie in Figur 5 dargestellt lediglich in den beiden mittleren Quadranten K1 und K2 erstreckt.

Der Einfachheit halber werden die in Figur 5 dargestellten Kurvenelemente L und R als archimedische Spiralen dargestellt (Radius proportional zum Winkel), d.h. die Kurvenelemente L werden in Polarkoordinaten (r, $\theta$) durch einen linearen Zusammenhang zwischen Radius r und Winkel $\theta$ beschrieben. In Verbindung mit den oben diskutierten Überlegungen ergeben sich daher für die einzelnen Kurvensegmente $C_n(\theta$ (n = 0, 1, 2):

$$C_0(\theta) = \sqrt{\left(\frac{4\cdot\Delta r\cdot\theta}{P} + r + \frac{\Delta r}{2}\right)^2 - 2\cdot\Delta r\cdot r\cdot\cos(2\pi\frac{\theta}{P})} \quad \text{für } -P/4<\theta<0 \ (Gl.\ 8.1)$$

$$C_1(\theta) = \frac{4\cdot\Delta r\cdot\theta}{P} + r + \frac{\Delta r}{2} \qquad\qquad \text{für } -P/4<\theta< 0 \ (Gl.\ 8.2)$$

$$C_2(\theta) = \sqrt{\left(\frac{4\cdot\Delta r\cdot\theta}{P} + r - \frac{\Delta r}{2}\right)^2 + 2\cdot\Delta r\cdot r\cdot\cos(2\pi\frac{\theta}{P})} \quad \text{für } 0<\theta<P/4 \ (Gl.\ 8.3)$$

In den Gleichungen 8.1, 8.2 und 8.3 stellt r jeweils den mittleren Radius der Detektorelemente dar, Δr gibt den radialen Abstand der Endpunkte des Kurvenzugs O zu den Endpunkten U an, womit sich ergibt:

$$C_0(0) = C_0(-P/4) = r - \Delta r/2 \qquad\qquad\qquad\qquad \text{(Gl. 9.1)}$$

$$C_2(0) = C_2(+P/4) = r + \Delta r/2 \qquad\qquad\qquad\qquad \text{(Gl. 9.2)}$$

Auch im Fall einer rotatorischen Positionsmesseinrichtung lassen sich somit auf Basis der erfindungsgemäßen Überlegungen entsprechende Detektoranordnungen ausgestalten.

Abschließend seien eine Reihe von Modifikationen und Abwandlungen der vorliegenden Erfindung erläutert, die ebenfalls allesamt in Verbindung mit den oben diskutierten Maßnahmen zum Einsatz kommen können.

So können alternativ zu den oben vorgesehenen Filterfunktions-Varianten im Rahmen der vorliegenden Erfindung selbstverständlich auch noch andere Filterfunktionen F(x) verwendet werden, um daraus entsprechende Konturen für Detektorelemente abzuleiten. Beispielsweise ist es etwa möglich trapezförmige Filterfunktionen F(x) zu verwenden, wenn nur wenige Oberwellen gefiltert werden sollen. Eine trapezförmige Filterfunktion F(x) zur Filterung der 3. und 5. Oberwelle würde beispielsweise folgendermaßen gewählt werden:

$$F(x) = \begin{cases} 4/3 - 5*|x| & \text{für } 1/15 < |x| < 4/15 \\[2ex] 1 & \text{für } |x| < 4/15 \end{cases} \qquad\qquad \text{(Gl. 10)}$$

Grundsätzlich vorteilhaft erweist sich ferner die Wahl symmetrischer Filterfunktionen F(x), für die dann F(-x) = F(x) gilt. In diesem Fall kann die Detektoranordnung für ein abzutastendes lineares Streifenmuster punktsymmetrisch zu einem Zentrum ausgeführt werden. Diese Maßnahme bewirkt wiederum eine erhöhte Stabilität gegenüber eventuellen Störungen des Streifenmusters.

Ebenso ist es möglich, entsprechend ausgestaltete Detektorelemente nicht nur in der Streifenverschieberichtung v unmittelbar benachbart zueinander anzuordnen, sondern diese auch senkrecht zu v, also in y-Richtung, aneinander zureihen; dies ist insbesondere dann möglich, wenn die begrenzenden oberen und unteren Kurvenzüge O und U aus den oben diskutierten Beispielen parallel zur v-Achse verlaufen. Übereinander angeordnete Detektorelemente sind in diesem Fall jeweils elektrisch leitend miteinander verbunden und liefern gleichphasige Abtastsignale. Besonders vorteilhaft ist hierbei, die jeweils übereinander vorgesehenen Detektorelemente bzgl. der Verschieberichtung v gespiegelt zueinander auszubilden. Derartige, sich in y-Richtung reproduzierende Detektoranordnungen sind besonders unempfindlich gegenüber eventuellen Störungen im abgetasteten Streifenmuster, wie etwa Verschmutzungen auf dem Maßstab, Teilungsfehler, Verkippungen etc..

Ferner ist es möglich, die oben erläuterte Formgebung der einzelnen Detektorelemente nicht nur durch die unmittelbare Formgebung des jeweiligen lichtempfindlichen Halbleitermateriales vorzunehmen, sondern ggf. zusätzlich durch opake (Teil-) Abdeckmasken auf den Detektorgrundflächen. Die Abdeckmasken sind hierbei unmittelbar auf den Detektorelementen oder zumindest auf Teilen derselben angeordnet und besitzen eine entsprechende Formgebung der lichtdurchlässigen Bereiche. Vorzugsweise wird Aluminium für derartige Abdeckmasken verwendet. Insbesondere bei sehr kleinen abzutastenden Streifenmusterperioden und/oder zur entsprechenden Formgebung im Bereich der äußeren Begrenzungslinien kann sich eine derartige Variante als vorteilhaft erweisen.

Ebenso ist es selbstverständlich möglich, Breiten der Detektorelemente vorzusehen, die von P/4 abweichen, also beispielsweise P/3 , um derart eine Detektoranordnung zu schaffen, bei der drei um 120° phasenversetzte Abtastsignale zur Weiterverarbeitung verfügbar sind usw..

Zu erwähnen ist ferner, dass in der Praxis die einzelnen pn-Übergänge benachbarter Detektorelemente gegeneinander isoliert werden müssen. Hierzu gibt es verschiedene Möglichkeiten.

Beispielsweise kann dies durch Trennbereiche in Form sehr schmaler Isolationsgräben erfolgen, die durch geeignete Ätzprozesse hergestellt werden. Die Breiten e derartiger Trennbereiche bzw. Isolationsgräben wären kleiner als P/10 zu wählen. Besonders geeignet ist diese Variante im Fall von Detektorelementen auf der Basis von amorphem Silizium (α-Si). Aufgrund der geringen Breite e derartiger inaktiver Bereiche wird die oben erläuterte Filterwirkung praktisch nicht gestört. Es liegt jedoch nach wie vor eine maximal dichte Detektorelement-Anordnung vor.

Alternativ können die pn-Übergänge aber auch zwischen den einzelnen Detektorelementen unterbrochen werden, wie dies z.B. bei getrennten p-Dotierungsbereichen auf einem n-Substrat der Fall ist. Diese Variante eignet sich insbesondere im Fall von Detektorelementen auf Basis kristalliner Halbleitermaterialien. Die Trennbereiche zwischen den Detektorelementen besitzen hierbei etwa eine Breite e in der Größenordnung 2 - 5μm. Innerhalb dieser Trennbereiche liegt nach wie vor eine bestimmte Strahlungsempfindlichkeit vor, die jedoch kontinuierlich abnimmt. Als letzlich effektiv wirksame Detektorbegrenzung ist in diesem Fall daher die Mitte der jeweiligen Trennbereiche zu verstehen.

Je nach verwendeter Detektortechnologie gibt es demzufolge bestimmte Mindestabstände e zwischen benachbarten Detektorelementen, wobei diese Trennbereiche jedoch z.T. noch strahlungsempfindlich sind. Unter der angestrebten dichten Detektorelement-Anordnung ist deshalb grundsätzlich eine Anordnung zu verstehen, bei der im Bereich der Berührlinien der Detektorelemente die technologisch bedingten Mindestabstände e gewählt werden und keine darüberhinausgehenden weiteren Abstandsflächen vorgesehen werden, insbesondere nicht zum Erzielen einer bestimmten Filterwirkung. Falls die technologisch bedingten Mindestabstände e im Vergleich zur Streifenmusterperiode P signifikant werden, kann die erfindungsgemäße Ausgestaltung der Detektorgeometrie auch auf Detektorbreiten b = P/N - e angewandt werden.

Analog zu den obigen Gleichungen 2.1 - 2.4 könnten dann anstelle der erwähnten Quadranten aufeinanderfolgende Intervalle $I_n$ mit der Breite b definiert werden, in denen die oberen Begrenzungslinien $C_{n+1}$ und die unteren Begrenzungslinien $C_n$ der Detektorelemente durch die Beziehung

$$C_{n+1}(x) = C_n(x-b) + F(x) \qquad \text{(Gl. 11)}$$

miteinander verknüpft sind. Die einzelnen Detektorelemente können demzufolge wiederum durch eine Verschiebung um ganzzahlige Vielfache von P/N ineinander überführt werden.

Im Rahmen der vorliegenden Erfindung gibt es somit eine Reihe weiterer Ausgestaltungsmöglichkeiten, die allesamt auf den oben diskutierten Prinzipien basieren.

**Patentansprüche**

1. Optoelektronische Detektoranordnung zur Erzeugung mehrerer periodischer, phasenverschobener Abtastsignale (S0, S90, S180, S270) aus der Abtastung eines periodischen Streifenmusters (S), welches sich in einer Detektionsebene mit der Streifenmusterperiode P in einer Streifenverschieberichtung (v) erstreckt, bestehend aus mehreren Detektorelementen (34.1 - 34.8; 44; 54; 64), wobei die geometrische Form der einzelnen Detektorelemente (34.1 - 34.8; 44; 54; 64) derart gewählt ist, dass darüber eine definierte Filterung unerwünschter Oberwellen aus den Abtastsignalen resultiert und innerhalb einer Streifenmusterperiode P insgesamt N Detektorelemente (34.1 - 34.8; 44; 54; 64) der gleichen, nicht-rechteckförmigen geometrischen Form in der Streifenverschieberichtung (v) unmittelbar aufeinanderfolgend angeordnet sind, wobei die Detektorelemente (34.1 - 34.8; 44; 54; 64) derart aufeinanderfolgend angeordnet sind, dass diese durch eine Verschiebungstransformation in Streifenverschieberichtung (v) um Vielfache von P/N ineinander überführbar sind,
**dadurch gekennzeichnet, dass**

   - N = 3 oder N = 4 gewählt ist, und
   - die Detektorelemente (34.1 - 34.8; 44; 54; 64) jeweils den gleichen Flächenschwerpunkt in Bezug auf die Richtung senkrecht zur Streifenverschieberichtung (v) besitzen.

2. Optoelektronische Detektoranordnung zur Erzeugung mehrerer periodischer, phasenverschobener Abtastsignale (S0, S90, S180, S270) aus der Abtastung eines periodischen Streifenmusters (S), welches sich in einer Detektionsebene mit der Streifenmusterperiode P in einer Streifenverschieberichtung (v) erstreckt, bestehend aus mehreren Detektorelementen (34.1 - 34.8; 44; 54; 64), wobei die geometrische Form der einzelnen Detektorelemente (34.1 - 34.8; 44; 54; 64) derart gewählt ist, dass darüber eine definierte Filterung unerwünschter Oberwellen aus den Abtastsignalen resultiert und innerhalb einer Streifenmusterperiode P insgesamt N Detektorelemente (34.1 - 34.8; 44; 54; 64) der gleichen, nicht-rechteckförmigen geometrischen Form in der Streifenverschieberichtung (v) unmittelbar aufeinanderfolgend angeordnet sind, wobei die die Detektorelemente (34.1 - 34.8; 44; 54; 64) derart aufeinanderfolgend angeordnet sind, dass diese durch eine Verschiebungstransformation um Vielfache von P/N ineinander überführbar sind,
**dadurch gekennzeichnet, dass**

   - N = 3 oder N = 4 gewählt ist, und
   - die Detektorelemente (34.1 - 34.8; 44; 54; 64) durch eine Verschiebungstransformation in Streifenverschiebungsrichtung (v) um den Verschiebungsbetrag d=P/N ineinander überführbar sind.

3.  Optoelektronische Detektoranordnung nach Anspruch 1 oder 2, **dadurch gekennzeichnet, dass** sich benachbarte Detektorelemente (34.1 - 34.8; 44; 54; 64) entlang einer gemeinsamen Berührlinie (BL) berühren.

4.  Optoelektronische Detektoranordnung nach Anspruch 3, **dadurch gekennzeichnet, dass** die Berührlinien (BL) mit der Streifenverschieberichtung (v) einen Winkel ungleich 90° einschließen.

5.  Optoelektronische Detektoranordnung nach Anspruch 3, **dadurch gekennzeichnet, dass** die Detektorelemente (34.1 - 34.8) im Bereich der Längsenden bogenförmige Begrenzungslinien (BG) aufweisen.

6.  Optoelektronische Detektoranordnung nach Anspruch 1 oder 2, **dadurch gekennzeichnet, dass** die Detektorelemente (34.1 - 34.8; 44; 54; 64) jeweils eine geometrische Form aufweisen, die derart von einem Rechteck abweicht, dass darüber eine Filterung mindestens einer ungeradzahligen Oberwelle aus den Abtastsignalen resultiert.

7.  Optoelektronische Detektoranordnung nach Anspruch 1 oder 2, **dadurch gekennzeichnet, dass** die Detektorelemente (34.1 - 34.8; 44; 54; 64) entlang einer Schnittlinie parallel zur Streifenverschieberichtung (v) jeweils die gleiche Breite (b) besitzen.

8.  Optoelektronische Detektoranordnung nach Anspruch 7, **dadurch gekennzeichnet, dass** die Detektorelemente (34.1 - 34.8; 44; 54; 64) entlang jeder Schnittlinie eine Breite b gemäß

$$b = P/N - e$$

besitzen, mit

    b := Breite eines Detektorelementes entlang einer Schnittlinie
    P := abgetastete Streifenmusterperiode
    N := Zahl der Detektorelemente pro abgetasteter Streifenmusterperiode
    e := technologie-abhängiger Mindestabstand aktiver Detektorelementflächen

9.  Optoelektronische Detektoranordnung nach mindestens einem der vorangehenden Ansprüche, **dadurch gekennzeichnet, dass** Detektorelemente (34.1 - 34.8; 44; 54; 64) miteinander elektrisch leitend verbunden sind, die aus der Abtastung des Streifenmusters (S) phasengleiche Abtastsignale ($S_0$, $S_{90}$, $S_{180}$, $S_{270}$) erzeugen.

10. Optoelektronische Detektoranordnung, **dadurch gekennzeichnet, dass** senkrecht zur Verschieberichtung (v) mehrere Detektoranordnungen nach mindestens einem der vorangehenden Ansprüche parallel benachbart angeordnet sind.

11. Positionsmesseinrichtung zur Bestimmung der Position zweier zueinander beweglicher Objekte, bestehend aus einer sich in einer Messrichtung (x) erstreckenden Messteilung (11) und einer relativ hierzu beweglichen Abtasteinheit (20), wobei die Abtasteinheit (20) eine Lichtquelle (21) und eine optoelektronische Detektoranordnung (24) nach mindestens einem der vorangehenden Ansprüche umfasst.

12. Positionsmesseinrichtung nach Anspruch 11, **dadurch gekennzeichnet, dass** sich die Messrichtung (x) entlang einer Geraden erstreckt.

13. Positionsmesseinrichtung nach Anspruch 11, **dadurch gekennzeichnet, dass** sich die Messrichtung (x) entlang einer Kreisbahn erstreckt.

**Claims**

1.  Optoelectronic detector arrangement for generating a plurality of periodic, phase-shifted scanning signals (S0, S90, S180, S270) from the scanning of a periodic strip pattern (S) which extends in a strip displacement direction (v) in a detection plane with the strip pattern period P, consisting of a plurality of detector elements (34.1-34.8; 44; 54; 64), the geometrical shape of the individual detector elements (34.1-34.8; 44; 54; 64) being selected in such a manner that defined filtering of undesirable harmonics from the scanning signals results thereby and a total of N detector elements (34.1-34.8; 44; 54; 64) of the same, non-recrangular geometrical shape are arranged in immediate succession in the strip displacement direction (v) within a strip pattern period P, wherein the detector elements (34.1-34.8; 44; 54; 64) are arranged in succession in such a mariner that they can be transformed into one another by means of displacement transformation in the strip displacement direction (v) by multiples of P/N, **characterized in that**

  - N = 3 or N = 4 is selected, and
  - the detector elements (34.1-34.8; 44; 54; 64) each have the same centroid with respect to the direction perpendicular to the strip displacement direction (v).

2.  Optoelectronic detector arrangement for generating a plurality of periodic, phase-shifted scanning signals (S0, S90, S180, S270) from the scanning of a periodic strip pattern (S) which extends in a strip displacement direction (v) in a detection plane with the strip pattern period P, consisting of a plurality of detector elements (34.1-34.8; 44; 54; 64), the geometrical shape of the individual detector elements (34.1-34.8; 44; 54; 64) being selected in such a manner that defined filtering of undesirable harmonics from the scanning signals results thereby and a total of N detector elements (34.1-34,8; 44; 54; 64) of the same, non-rectangular geometrical shape are arranged in immediate succession in the strip displacement direction (v) within a strip pattern period P, wherein the detector elements (34.1-34.8; 44; 54; 64) are arranged in succession in such a manner that they can be transformed into one another by means of a displacement transformation by multiples of P/N, **characterized in that**

  - N = 3 or N = 4 is selected, and
  - the detector elements (34.1-34.8; 44; 54; 56) can be transformed into one another by means of a displacement transformation in the strip displacement direction (v) by the displacement amount d=P/N.

3.  Optoelectronic detector arrangement according to Claim 1 or 2, **characterized in that** adjacent detector elements (34.1-34.8; 44; 54; 64) touch along a common contact line (BL).

4.  Optoelectronic detector arrangement according to Claim 3, **characterized in that** the contact lines (BL) enclose an angle which is not equal to 90° with the strip displacement direction (v).

5.  Optoelectronic detector arrangement according to Claim 3, **characterized in that** the detector elements (34.1-34.8) have arcuate boundary lines (BG) in the region of the longitudinal ends.

6.  Optoelectronic detector arrangement according to Claim 1 or 2, **characterized in that** the detector elements (34.1-34.8; 44; 54; 64) each have a geometrical shape which differs from a rectangle in such a manner that this results in filtering of at least one odd harmonic from the scanning signals.

7.  Optoelectronic detector arrangement according to Claim 1 or 2, **characterized in that** the detector elements (34.1-34.8; 44; 54; 64) each have the same width (b) along an intersection line parallel to the strip displacement direction (v).

8.  Optoelectronic detector arrangement according to Claim 7, **characterized in that** the detector elements (34.1-34.8; 44; 54; 64) have a width b along each intersection line according to

$$b = P/N - e$$

where

  b:= width of a detector element along an intersection line
  P:= scanned strip pattern period
  N: = number of detector elements per scanned strip pattern period
  c:= technology-dependent minimum distance between active detector clement surfaces.

9.  Optoelectronic detector arrangement according to at least one of the preceding claims, **characterized in that** detector elements (34.1-34,8; 44; 54; 64) are connected to one another in an electrically conductive manner and generate in-phase scanning signals ($S_0$, $S_{90}$, $S_{180}$, $S_{270}$) from the scanning of the strip pattern (S).

10.  Optoelectronic detector arrangement, **characterized in that** a plurality of detector arrangements according to at least one of the preceding claims are arranged in a parallel manner adjacent to one another in a manner perpendicular to the displacement direction (v).

11. Position-measuring device for determining the position of two objects which are movable with respect to one another, consisting of a measuring graduation (11), which extends in a measuring direction (x), and a scanning unit (20) which is movable relative to the measuring graduation, the scanning unit (20) comprising a light source (21) and an optoelectronic detector arrangement (24) according to at least one of the preceding claims.

12. Position-measuring device according to Claim 11, **characterized in that** the measuring direction (x) extends along a straight line.

13. Position-measuring device according to Claim 11, **characterized in that** the measuring direction (x) extends along a circular path.

**Revendications**

1. Dispositif détecteur optoélectronique destiné à générer une pluralité de signaux de balayage déphasés périodiques (S0, S90, S180 S2170) par balayage d'un motif périodique de bandes (S) s'étendant dans un plan de détection avec une période P du motif de bandes dans une direction (v) de déplacement des bandes, comprenant une pluralité d'éléments détecteurs (34.1 - 34.8 ; 44 ; 54 ; 64), dans lequel la forme géométrigue des éléments détecteurs individuels (34.1 - 34.8 ; 44 ; 54 ; 64) est sélectionnée de telle manière qu'il en résulte sur celle-ci un filtrage défini d'harmoniques indésirables des signaux de balayage et qu'à l'intérieur d'une période du motif de bandes P, un total N d'éléments détecteurs (34.1 - 34.8 ; 44 ; 54 ; 64) de même forme géométrique non rectangulaire dans la direction (v) de déplacement des bandes soient disposés directement à la suite les uns des autres, dans lequel les éléments détecteurs (34.1 - 34.8 ; 44 ; 54 ; 64) sont disposés à la suite les uns des autres de telle manière qu'ils puissent être transformés les uns en les autres par une transformation de déplacement dans la direction (v) de déplacement des bandes d'un multiple de P/N,
**caractérisé en ce que**

- on sélectionne N = 3 ou N = 4, et
- les éléments détecteurs (34.1 - 3.8 ; 44 ; b4 ; 64) possèdent à chaque fois le même centre de gravité de surface par rapport à la direction perpendiculaire à la direction (v) de déplacement des bandes.

2. Dispositif détecteur optoélectronique destiné à générer une pluralité de signaux de balayage déphasés iodiques (S0, S90, S180 S270) par balayage d'un motif périodique de bandes (S) s'étendant dans un plan de détection avec une période P du motif de bandes dans une direction v) de déplacement des bandes, comprenant une pluralité d'éléments détecteurs (34.1 - 34.3 ; 44 ; 54 ; 64), dans lequel la forme géométrigue des éléments détecteurs individuels (34.1 - 34.8 ; 44 ; 54 ; 64) est sélectionnée de telle manière qu'il en résulte sur celle-ci un filtrage défini d'harmoniques indésirables des signaux de balayage et qu'à l'intérieur d'une période du motif de bandes P, un total N d'éléments détecteurs (34.1 - 34.8 ; 44 ; 54 ; 64) de même forme géométrique non rectangulaire dans la direction (v) de déplacement des bandes soient disposés directement à la suite les uns des autres, dans lequel les éléments détecteurs (34.1 - 34.8 ; 44 ; 54 ; 64) sont disposés à la suite les uns des autres de telle manière qu'ils puissent être transformés les uns en les autres par une transformation de déplacement d'un multiple de P/N,
**caractérisé en ce que**

- on sélectionne N = 3 ou N = 4, et
- les éléments détecteurs (34.1 - 34.8 ; 44 ; 54 ; 64) peuvent être transformé les uns en les autres par une transformation de déplacement dans la direction (v) de déplacement des bandes de la valeur de déplacement d=P/N.

3. Dispositif détecteur optoélectronique selon la revendication 1 ou 2, **caractérisé en ce que** des éléments détecteurs (34.1 - 34.8 ; 44 ; 54 ; 64) adjacents sont en contact le long d'une ligne de contact commune (BL).

4. Dispositif détecteur optoélectronique selon la revendication 3, **caractérisé en ce que** les lignes de contact (BL) forment avec la direction (v) de déplacement des bandes un angle différent de 90°.

5. Dispositif détecteur optoélectronique selon la revendication 3, **caractérisé en ce que** les éléments détecteurs (34.1- 34.8) présentent des lignes de délimitation (BG) incurvées dans la région des extrémités longitudinales.

6. Dispositif détecteur optoélectronique selon la revendication 1 ou 2, **caractérisé en ce que** les éléments détecteurs (34.1 - 34.8 ; 44 ; 54 ; 64) présentent chacun une forme géométrique qui s'écarte de celle d'un rectangle de telle sorte qu'il en résulte un filtrage d'au moins un harmonique impair des signaux de balayage.

7. Dispositif détecteur optoélectronique selon la revendication 1 ou 2 **caractérisé en ce que** les éléments détecteurs (34,1 - 34.8 ; 44 ; 54 ; 64) possèdent chacun la même largeur (b) le long d'une ligne d'intersection parallèle à la direction (v) de déplacement des bandes.

8. Dispositif détecteur optoélectronique selon la revendication 7, **caractérisé en ce que** les éléments détecteurs (34.1 - 34.8 ; 44 ; 54 ; 64) possèdent le long de chaque ligne d'intersection une largeur b définie par

$$b = P/N - e$$

où

      b : largeur d'un élément détecteur le long d'une ligne d'intersection
      P : période de balayage du motif de bandes
      N : nombre d'éléments détecteurs par période du motif de bandes balayé
      e : distance minimale dépendant de la technologie entre les surfaces actives des éléments détecteurs.

9. Dispositif détecteur optoélectronique selon au moins l'une des revendications précédentes, **caractérisé en ce que** des éléments détecteurs (34.1 - 34.8 ; 44 ; 54 ; 64) générant à partir du balayage du motif de bandes (S) des signaux de balayage en phase ($S_0$, $S_{90}$, $S_{180}$, $S_{270}$) sont reliés les uns aux autres de manière électriquement conductrice.

10. Dispositif détecteur optoélectronique, **caractérisé en ce qu'**une pluralité de dispositifs détecteurs selon au moins l'une des revendications précédentes sont disposés parallèlement et de manière adjacente les uns aux autres perpendiculairement à la direction (v) de déplacement.

11. Système de mesure de position destiné à déterminer la position de deux objets mobiles l'un par rapport à l'autre, constitué d'une graduation de mesure (11) s'étendant dans une direction de mesure (x) et d'une unité de balayage (20) mobile par rapport à celle-ci, dans lequel l'unité de balayage (20) comprend une source de lumière (21) et un dispositif détecteur optoélectronique (24) selon au moins l'une des revendications précédentes.

12. Système de mesure de position selon la revendication 11, **caractérisé en ce que** la direction de mesure (x) s'étend le long d'une droite.

13. Système de mesure de position selon la revendication 11, **caractérisé en ce que** la direction de mesure (x) s'étend le long d'une trajectoire circulaire.

FIG. 1

FIG. 2

EP 1 477 777 B3

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 250711 A2
- EP 849566 B1

- EP 541829 B1